# EUROPEAN PATENT SPECIFICATION

(11) **EP 2 239 487 B1**
(45) Date of publication and mention of the grant of the patent: **07.12.2011**
(21) Application number: 10159356.4
(22) Date of filing: 08.04.2010
(51) Int. Cl.: F16L 3/08, F16L 3/237, F16L 55/035, F16L 3/10

(54) **Clamp device**
Klemmvorrichtung
Dispositif de pince

(30) Priority: 10.04.2009 JP 2009096118; 05.02.2010 JP 2010023967
(43) Date of publication of application: 13.10.2010
(73) Proprietor: Honda Motor Co., Ltd., Tokyo 107-8556 (JP)
(72) Inventor: Yamada, Satoshi, Saitama 351-0193 (JP); Shimoyama, Kazuaki, Saitama 351-0193 (JP)
(74) Representative: Herzog, Markus

(56) References cited:
- EP-A1- 0 638 756
- EP-A1- 1 847 746
- EP-A2- 1 013 978
- DE-A1- 2 162 662
- DE-A1- 2 303 634
- JP-U- 63 196 807
- US-A- 5 257 768
- US-A1- 2007 222 129
- US-A1- 2008 053 549

## Description

This application is based on and claims the benefit of priority from Japanese Patent Application Nos. 2009-096118 and 2010-023967, respectively filed on 10 April 2009 and 5 February 2010, the contents of which are incorporated herein by reference.

### BACKGROUND OF THE INVENTION

### Field of the Invention

The present invention relates to a clamp device. More specifically, it relates to a clamp device that mutually restricts a first clamped body and a second clamped body, thereby suppressing relative movement of both clamped bodies.

### Related Art

A clamp device according to the preamble of claim 1 is known from DE-A-23 03 634.

Conventionally, it has been known that there are two pipes that communicate an engine with a turbocharger, those being an oil supply pipe for supplying oil from the engine side to the turbocharger side and an oil scavenging pipe for discharging oil from the turbocharger side to the engine side (for example, refer to Patent Document 1). In addition, a clamp device has been known that retains two pipes such as fuel line hoses of an internal combustion engine in an adjacent state (for example, refer to Patent Document 2).
Patent Document 1: Japanese Unexamined Patent Application Publication No. H09-151718
Patent Document 2: Japanese Unexamined Utility Model Application No. S63-196807

US-A-5 257 768, EP-A-1 847 746, DE-A-2 162 662 and US-A-2008/0053549 disclose clamp devices in which the first and second shock absorbing portions have an identical construction. Moreover, JP-U-63-196807 and DE-T-694 01 402 disclose embodiments having a split construction including an upper half and a lower half formed of elastic material.

### SUMMARY OF THE INVENTION.

However, in Patent Document 1, due to both of the oil supply pipe and the oil scavenging pipe being held at only two points on the engine side and the turbocharger side, which are both ends of both pipes, the layout degree of freedom of the pipes is high (oil can be extracted and returned from any position on the engine); however, since there is no other member retaining, large movement (mainly oscillations) in the pipes may occur.

In addition, the clamp device in Patent Document 2 retains two pipes in an adjacent state; however, the two pipes are disposed to be substantially parallel, and thus when a large movement occurs in one pipe, the force due to this movement may intensify the movement of the other pipe.

The present invention has an object of providing a clamp device that can suppress movement (for example, vibration, migration, displacement, etc.) of a first clamped body and a second clamped body with a clamp by way of two pipes (the first clamped body and the second clamped body) being retained by the clamp, so that an axis of extending directions of the pipes at a retained portion of each of the two pipes becomes a skewed positional relationship.

According to a first aspect of the present invention, a clamp device includes: a first clamped body and a second clamped body disposed to be adjacent; a clamp that has a first retaining portion that retains the first clamped body and a second retaining portion that retains the second clamped body, and that mutually restricts the first clamped body and the second clamped body; and a first shock-absorbing portion containing an elastic member that is interposed between the first clamped body and the first retaining body, and a second shock-absorbing portion containing an elastic member that is interposed between the second clamped body and the second retaining portion, in which the clamp, and the first shock-absorbing portion and the second shock-absorbing portion are formed to be separate bodies, and in which the first shock-absorbing portion and the second shock-absorbing portion are circular, and have an incised portion for inserting the first clamped body and the second clamped body formed in each of the first shock-absorbing portion and the second shock-absorbing portion.

According to the first aspect of the invention, since a state in which the first clamped body and the second clamped body are inserted can be maintained by the elastic force of the first shock-absorbing portion and the second shock-absorbing portion themselves, it becomes possible to perform a fixing operation of the clamp with extraordinary ease and stability.

Further to the first aspect of the invention, the first shock-absorbing portion and the second shock-absorbing portion, which contain an elastic member, have compression rates that are respectively different in a tightened state of the clamp.

According to the addition to the first aspect of the invention, it becomes possible to appropriately select an elastic member with the most suitable compression rate to complement the material properties of the first clamped body and the second clamped body.

Furthermore, by making the compression rates of both elastic members different, the extents to which both clamped bodies are restricted by the clamp become different. Accordingly, a situation is made in which the movements of both clamped bodies differ more greatly, and therefore it becomes possible to further suppress the movements of both clamped bodies.

Further to the first aspect of the invention, the first shock-absorbing portion and the second shock-absorbing portion are joined in one body by a joining portion.

According to the addition to the first aspect of the invention, since the first shock-absorbing portion and the second shock-absorbing portion are joined in one body by the joining portion, the number of components can be reduced, and thus assembly workability can also be improved. In addition, since the first shock-absorbing portion and the second shock-absorbing portion are joined, the relative positioning of both when assembling is fixed automatically.

According to a second aspect of the invention, in the clamp device as described in the first aspect, the first shock-absorbing portion and the second shock-absorbing portion are joined in one body by a joining portion, a first-side joining portion that is positioned at one side of the joining portion and joins the first retaining portion with the second retaining portion, and a second-side joining portion that is positioned at another side of the joining portion and joins the first retaining portion with the second retaining portion are formed so as to be separated a predetermined distance, in a tightened state of the clamp, and the predetermined distance is formed so as to be at least a thickness of the joining portion.

According to the second aspect of the invention, the separation distance between the first-side joining portion and the second-side joining portion was formed so as to be at least the thickness of the joining portion on the shock-absorbing portion side when the clamp is tightened.

Accordingly, since the distance can be made to an extents that maintains the joining portion of the shock-absorbing side so as not to be compressed, it is possible to prevent vibration and noise of the joining portion on the shock-absorbing side, as well as prevent the joining portion on the shock-absorbing side deteriorating by coming together with foreign substances and the like in the gap between the joining portion on the clamp side and the joining portion on the shock-absorbing side.

According to a third aspect of the invention, in the clamp device as described in the second aspect, the clamp has a hinge portion that is disposed at an end side in an aligned direction of the first clamped body and the second clamped body and deforms with opening and closing of the clamp, and an open/close portion that is disposed at another end side in the aligned direction and separates when the clamp is opened and abuts when closed, and the incised portion is disposed at a position that substantially coincides with an open/close portion direction in each of the first shock-absorbing portion ad the second shock-absorbing portion when the clamp is closed.

According to the third aspect of the invention, by disposing the incised portions (slits) at positions substantially coinciding with a direction of the open/close portion on each of the first shock-absorbing portion and the second shock-absorbing portion, it becomes possible to suppress partial biasing or tucking of the first shock-absorbing portion or the second shock-absorbing portion during an operation to tighten the clamp.

According to a fourth aspect of the invention, in the clamp device as described in the third aspect, a positioning portion is formed in the first shock-absorbing portion and the first retaining portion, and relative positioning of the first shock-absorbing portion and the first retaining portion is set by engaging both of the positioning portions.

According to the fourth aspect of the invention, since the first shock-absorbing portion and the first retaining portion have positioning portions, it becomes possible to make the slit positions more surely coincide with the direction of the open/close portion.

According to a fifth aspect of the invention, in the clamp device as described in the fourth aspect, the positioning portion of the first retaining portion is formed in a hinge portion of the clamp as a concave portion, and the positioning portion of the first shock-absorbing portion is formed as a convex portion that corresponds to the concave portion.

According to the fifth aspect, since concave portions for positioning are formed at the hinge portion, the rigidity of the hinge portion decreases, and thus it is possible to more easily open and close the clamp.

According to a first mode, a clamp device includes: a first clamped body and a second clamped body disposed to be adjacent; and a clamp that has a first retaining portion that retains the first clamped body and a second retaining portion that retains the second clamped body, and that mutually restricts the first clamped body and the second clamped body, in which an axis of an extending direction of the first clamped body at a first retained portion, which is a clamp retained portion of the first clamped body, and an axis of an extending direction of the second clamped body at a second retained portion, which is a clamp retained portion of the second clamped body, are in a skewed positional relationship.

According to the first mode of the invention, since the axis of the extending direction of the first clamped body at the first retained portion and the axis of the extending direction of the second clamped body at the second retained portion are in a skewed positional relationship, even if movement (for example, vibration, migration, displacement, etc.) in the same vector occurs in the first clamped body and the second clamped body temporarily, since the force vector added from the second clamped body to the clamp does not coincide with the force vector added from the first clamped body to the clamp, it is possible for the clamp to suppress movement (for example, vibration, migration, displacement, etc.) of the first clamped body and the second clamped body.

According to a second mode, in the clamp device as described in the first mode, a pipe diameter of the first retained portion and a pipe diameter of the second retained portion are different.

According to the second mode, since the pipe diameter of the first retained portion and the pipe diameter of the second retained portion are different, the sizes of the first retaining portion and the second retaining portion are naturally made to be different. Accordingly, the force vector added from the first clamped body to the clamp and the force vector added from the second clamped body to the clamp become more different, and thus it is possible for movement of the first clamped body and the second clamped body to be further suppressed.

According to a third mode, in the clamp device as described in the first or second mode, only one of the first clamped body or the second clamped body is provided with a damping portion that dampens movement of the clamped body.

According to the third mode, since movement (for example, vibration, migration, displacement, etc.) of one clamped body provided with the damping portion and the movement of another clamped body without a damping portion are made in a further differentiated state, it is possible for the movement of both clamped bodies to be further suppressed.

According to a fourth mode, in the clamp device as described in any one of the first to third modes, the first clamped body and the second clamped body are each a two-point support structure that is supported at one end and another end, and a first clamped body length, which is a span between both end supporting portions of the first clamped body, and a second clamped body length, which is a span between both end retaining portions of the second clamped body, are different.

According to the fourth mode of the invention, since the clamped bodies (for example, pipes, etc.) are made to be a two-point support structure, it is possible to increase the degrees of freedom in running the pipes.

Furthermore, if the spans are different, since the wavelength of the string vibrations occurring in both clamped bodies will be different, it is possible to make the movements of both clamped bodies be in a further differentiated state.

According to a fifth mode, in the clamp device as described in any one of the first to fourth modes, the first clamped body and the second clamped body are formed as hollow tubular bodies in which a fluid flows inside, and the flow rate of fluid flowing in the first clamped body and the flow rate of fluid flowing in the second clamped body are different.

According to the fifth mode of the invention, since the movements (migration, vibration) of both clamped bodies are made to be in a further differentiated state by making the flow rates of fluids flowing inside of both bodies different, it is possible to further suppress movement of both clamped bodies.

According to a sixth mode, in the clamp device as described in the fifth mode, the fluid flowing in the first clamped body and the fluid flowing in the second clamped body are made to flow in opposite directions.

According to the sixth mode of the invention, since the movement (migration, vibration) of both pipes is made to be in a further differentiated state by way of the fluids flowing in opposite directions in both clamped bodies, it is possible to further suppress movement of both clamped bodies.

According to a seventh mode, in the clamp device as described in any one of the first to sixth modes, the clamp is supported by only the first clamped body and the second clamped body.

According to the seventh mode, since the clamp does not receive external forces (vibration, etc.) except from the clamped bodies, it is possible to further suppress movement of both clamped bodies.

According to an eighth mode, the clamp device as described in any one of the first to seventh modes further includes an elastic member between the first clamped body and the first retaining portion, and between the second clamped body and the second retaining portion, respectively, in which a thickness of each of the elastic members is different.

According to the eighth mode, since the thicknesses of both elastic members are different, in a case where the compression amounts on both elastic members of the clamp are the same, the extents to which both clamped bodies are restricted by the clamp will be different. Accordingly, since the movements of both clamped bodies are made to be in a further differentiated state, it is possible to further suppress movement of both clamped bodies.

According to a ninth mode, the clamp device as described in any one of the first to eighth modes further includes an elastic member between the first clamped body and the first retaining portion, and between the second clamped body and the second retaining portion, respectively, in which a compression rate of each of the elastic members in a tightened state of the clamp is different.

According to the ninth mode, the extents to which both clamped bodies are restricted by the clamp become different because the compression rates of both elastic members are different. Accordingly, since the movements of both clamped bodies are made to be in a further differentiated state, it is possible to further suppress movement of both clamped bodies.

According to a tenth mode, a clamp device includes: a first clamped body and a second clamped body disposed to be adjacent; a clamp that has a first retaining portion that retains the first clamped body and a second retaining portion that retains the second clamped body, and mutually restricts the first clamped body and the second clamped body; and an elastic member having a first shock-absorbing portion that is interposed between the first clamped body and the first retaining portion, a second shock-absorbing portion that is interposed between the second clamped body and the second retaining portion, and a joining portion that joins the first shock-absorbing portion and the second shock-absorbing portion, in which the clamp and the elastic member are formed to be separate bodies, a first-side joining portion that is positioned on one side of the joining portion of the elastic member and joins the first retaining portion and the second retaining portion, and a second-side joining portion that is positioned on another side of the joining portion of the elastic member and joins the first retaining portion and the second retaining portion are formed so as to be separated a predetermined distance in a tightened state of the clamp, the predetermined distance being formed so as to be at least a thickness of the joining portion.

According to the tenth mode of the invention, by making the clamp and the elastic members to be separate bodies, the structure of each is simplified, and production thereof can also be carried out easily.

Furthermore, since the first shock-absorbing portion and the second shock-absorbing portion are joined by the joining portion, the number of components can be reduced, and thus assembly workability can also be improved. In addition, since the first shock-absorbing portion and the second shock-absorbing portion are joined, the relative positioning of both when assembling is fixed automatically.

Furthermore, since a portion of the clamp corresponding to the joining portion (first-side joining portion and second-side joining portion) is made a configuration in which the joining portion is not sandwiched even when tightening the clamp, it is possible to prevent displacement of the first shock-absorbing portion and second shock-absorbing portion from occurring when tightening (when tightening the elastic member with the clamp).

According to an eleventh mode, in the clamp device as described in the tenth mode, the clamp has a hinge portion that is disposed at an end side in an aligned direction of the first clamped body and the second clamped body and deforms with opening and closing of the clamp, and an open/close portion that is disposed at another end side in the aligned direction and separates when the clamp is opened and abuts when closed, in which the first shock-absorbing portion is formed in a circular shape that surrounds the entire circumference of the first clamped body, the first shock-absorbing portion has a slit for inserting the first clamped portion formed at a location in a circumferential direction, and the slit is disposed at a position that substantially coincides with an open/close portion direction, in a circumferential direction, when the clamp is closed.

According to the eleventh mode, by disposing the slit at a position substantially coinciding with the direction of the open/close portion in the circumferential direction of the first shock-absorbing portion, it becomes possible to suppress partial biasing or tucking of the first shock-absorbing portion during a tightening operation of the clamp.

According to a twelfth mode, in the clamp device as described in the tenth mode, the clamp includes a hinge portion that is disposed at an end side in an aligned direction of the first clamped body and the second clamped body and deforms with opening and closing of the clamp, and an open/close portion that is disposed at another end side in the aligned direction and separates when the clamp is opened and abuts when closed, in which the second shock-absorbing portion is formed in a circular shape that surrounds the entire circumference of the second clamped body, the second shock-absorbing portion has a slit for inserting the second clamped portion formed at a location in a circumferential direction, and the slit is disposed at a position that substantially coincides with an open/close portion direction, in a circumferential direction, when the clamp is closed.

According to the twelfth mode, by disposing the slit at a position substantially coinciding with the direction of the open/close portion in the circumferential direction of the second shock-absorbing portion, it becomes possible to suppress partial biasing or tucking of the second shock-absorbing portion during a tightening operation of the clamp.

According to a thirteenth mode, in the clamp device as described in the eleventh mode, a positioning portion is formed in each of the first shock-absorbing portion and the second shock-absorbing portion, and the relative positioning of the first shock-absorbing portion and the first retaining portion is set by engaging both of the positioning portions.

According to the thirteenth mode, since the first shock-absorbing portion and the first retaining portion have positioning portions, it becomes possible to make the slit positions to more surely coincide with the direction of the open/close portion.

According to a fourteenth mode, in the clamp device as described in the thirteenth mode, the positioning portion of the first retaining portion is formed as a concave portion in the hinge portion of the clamp, and the positioning portion of the first shock-absorbing portion is formed as a convex portion corresponding to the concave portion.

According to the fourteenth mode of the invention, since the concave portions for positioning are formed in the hinge portion, the rigidity of the hinge portion decreases, and thus it is possible to more easily open and close the clamp.

According to a fifteenth mode, a clamp device includes: an engine accessory disposed to be separated from an engine; a feed pipe that communicates a fluid passage inside of the engine and a fluid passage inside the engine accessory and that supplies fluid from a side of the engine to a side of the engine accessory; and a return pipe that communicates a fluid passage inside the engine and a fluid passage inside the engine accessory and that flows fluid from the engine accessory back to the engine, in which the feed pipe and the return pipe are disposed to be adjacent, each of the feed pipe and the return pipe is a two-point support structure that is supported at an end on the side of the engine and at an end on the side of the engine accessory, the clamp device further including a clamp that retains the feed pipe and the return pipe and mutually restricts the feed pipe and the return pipe, in which the clamp is supported only by the feed pipe and the return pipe.

According to the fifteenth mode, by the feed pipe and the return pipe being made a two-point support structure, it is possible to increase the degrees of freedom in running both pipes.

Furthermore, since both pipes are vibration insulated by connecting to the other pipe adjacent thereto without vibration insulating by connecting to the engine or the like, it is possible to make a vibration insulating structure be of small size and lightweight.

According to a sixteenth mode, in the clamp device as described in the fifteenth mode, the feed pipe and return pipe are formed to be one body by joining at any one of an engine side end of the feed pipe and an engine side end of the return pipe, or an engine accessory side end of the feed pipe and an engine accessory side end portion of the return pipe.

According to the sixteenth mode, by forming at least one of the like ends of the feed pipe and the return pipe to be integrally connected, it is possible to preliminarily assemble (sub-assembly) both pipes with the coupling portion and the clamp. Accordingly, it is possible to simplify assembly of the entire clamp device including the engine and engine accessories, and shorten the assembly time.

According to the present invention, it is possible to provide a clamp device that can suppress movement of the first clamped body and the second clamped in the clamp by retaining two pipes (the first clamped body and the second clamped body) with a clamp so that axes in extending directions of the pipes at the retained portion of each of the two pipes are in a skewed positional relationship.

### BRIEF DESCRIPTION OF THE DRAWINGS

FIG. 1 is a view showing a configuration of the clamp device, a configuration of the clamped body, and an outline configuration of an engine and the like, which is a peripheral configuration of the clamp device, according to an embodiment of the present invention;
FIG. 2 is a view showing an aspect before installing the clamp and a rubber component according to the embodiment to a feed pipe and a return pipe;
FIG. 3 is a view showing an aspect after installing the clamp and the rubber component according to the embodiment to the feed pipe and the return pipe;
FIG. 4 is a view showing a configuration of the clamp according to the embodiment;
FIG. 5 is a view showing a configuration of the rubber component according to the embodiment;
FIG. 6 is a cross-sectional view of the rubber component according to the embodiment;
FIG. 7 is a view showing a state in which the clamp and the rubber component according to the embodiment are joined together;
FIG. 8 is a table showing specifications of the rubber component according to the embodiment;
FIG. 9 is a cross-sectional view through the first retained portion and the second retained portion in the clamp device according to the embodiment when the clamp is tightened;
FIG. 10 is a view showing a configuration of the clamp according to the embodiment; and
FIG. 11 is a view showing a state in which the clamp and the rubber component according to the embodiment are joined together.

### DETAILED DESCRIPTION OF THE INVENTION

An embodiment of the present invention is explained below with reference to the drawings.

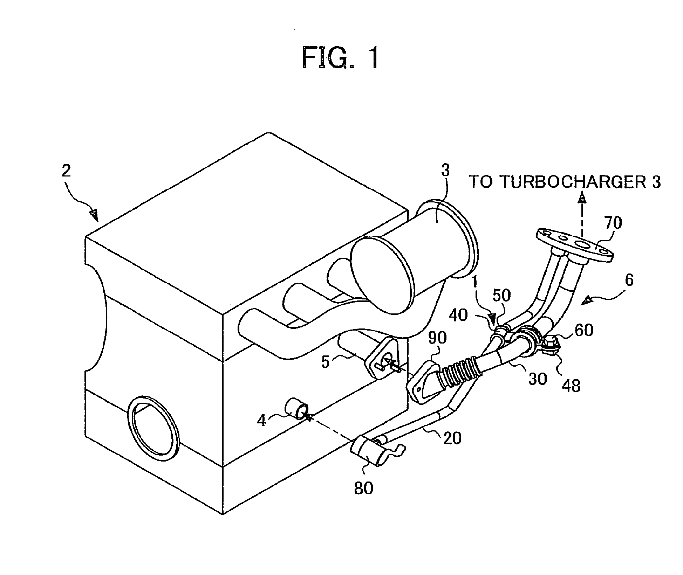

FIG. 1 is a view showing a configuration of the clamp device 1, a configuration of the clamped body 6, and an outline configuration of an engine block 2 and the like, which is a peripheral configuration of the clamp device 1, according to an embodiment of the present invention. It should be noted that the positional relationships and dimensions of each member are depicted to be exaggerated or simplified in FIGS. 1 to 9 below in order to facilitate understanding.

The clamp device 1 is configured from a clamp 40, a rubber component 50, a bolt 60 and a nut 48, which is formed integrally in the clamp 40. A clamped body 6 is configured with a feed pipe 20, a return pipe 30, a first coupling portion 70, a second coupling portion 80, and a third coupling portion 90.

It should be noted that the clamp 40 is made of metal or made of resin. Furthermore, the feed pipe 20 and the return pipe 30 may be made of metal, and may also be a pipe composed of an elastic member.

The engine 2 is provided with a turbocharger 3 that is disposed to be separated therefrom, and provided with a fourth coupling portion 4 and a fifth coupling portion 5 on a side surface thereof.

The feed pipe 20 is a pipe for supplying oil from the engine 2 to the turbocharger 3, and the return pipe 30 is a pipe for flowing oil back from the turbocharger 3 to the engine 2.

The feed pipe 20 communicates oil passages inside the engine 2 through the second coupling portion 80 and the fourth coupling portion 4, and communicates oil passages inside the turbocharger 3 through the first coupling portion 70. In addition, the return pipe 30 communicates oil passages inside the engine 2 through the third coupling portion 90 and the fifth coupling portion 5, and communicates oil passages inside the turbocharger 3 through the first coupling portion 70. It should be noted that the first coupling portion 70 joins like ends on the turbocharger 3 side of the feed pipe 20 and the return pipe 30.

The fourth coupling portion 4 and the fifth coupling portion 5 are arranged on the side surface of the engine 2 to have different heights from each other, and the fifth coupling portion 5 is formed to have a distance protruding towards the side of the clamp device 1 larger than the fourth coupling portion 4.

The feed pipe 20 and the return pipe 30 are retained by the clamp 40 to be mutually restricted. The rubber component 50 is interposed between the clamp 40 and the feed pipe 20 and the return pipe 30, respectively. In addition, the clamp 40 is fixed by threading a bolt 60 into a nut 48 formed integrally with the clamp 40. It should be noted that the feed pipe 20 and the return pipe 30 are disposed to be adjacent.

In addition, the clamp 40 is supported only by the feed pipe 20 and the return pipe 30. In other words, the clamp 40 is not fixed to another member, such as the engine 2, other than both pipes.

Furthermore, the pipe diameters for the feed pipe 20 at the first retained portion 21 described later and the return pipe 30 at the second retained portion 32 described later are different, and the return pipe 30 is formed to have a larger pipe diameter than the feed pipe 20.

In addition, each of the feed pipe 20 and the return pipe 30 is a two-point support structure that is supported only at a first end (end of the engine 2 side) and a second end (end of the turbocharger 3 side), and a pipe length of the feed pipe 20, which is a span between the first coupling portion 70 and the second coupling portion 80 of the feed pipe 20, and the pipe length of the return pipe 30, which is a span between the first coupling portion 70 and the third coupling portion 90 of the return pipe 30, are different.

Furthermore, although not illustrated, the feed pipe 20 and the return pipe 30 have oil flowing inside, and the average flow rate of oil flowing in the feed pipe 20 at the first retained portion 21 described below and the average flow rate of oil flowing in the return pipe 30 at the second retained portion 32 described below are different. It should be noted that, since the feed pipe 20 side has a pipe diameter that is narrower and oil pressure that is higher, the average flow rate of oil is faster than the return pipe 30.

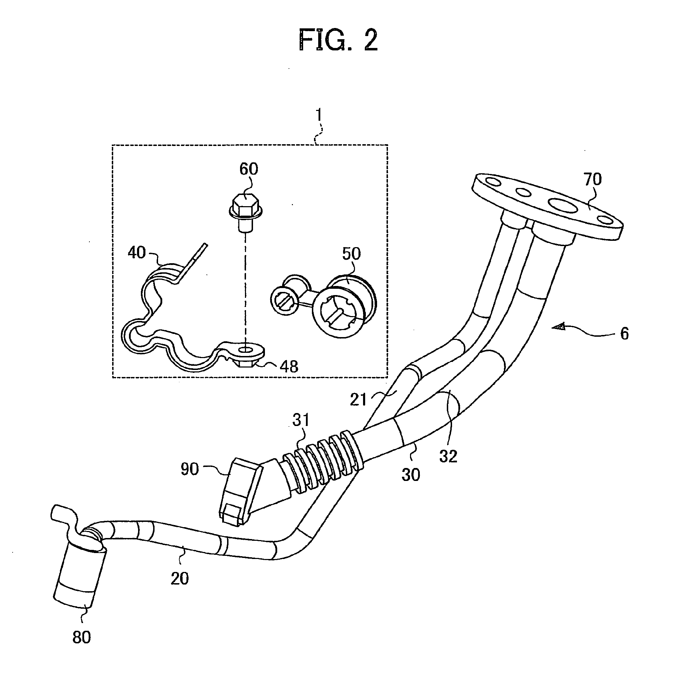

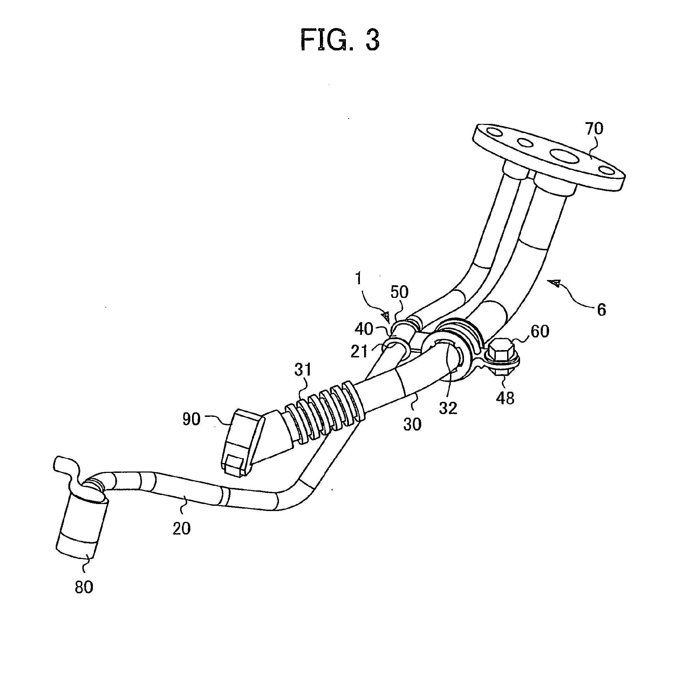

The configuration of the clamp device 1 and the clamped body 6 according to the present embodiment will be explained while referring to FIGS. 2 and 3. It should be noted that FIG. 2 is a view showing an aspect before installing the clamp 40 and the rubber component 50 on the feed pipe 20 and the return pipe 30, and FIG. 3 is a view showing an aspect after installing the clamp 40 and the rubber component 50 on the feed pipe 20 and the return pipe 30.

The feed pipe 20 is provided with a first retained portion 21 that is retained by the clamp 40, in addition to the configuration illustrated in FIG. 1, and the return pipe 30 is provided with a second retained portion 32 that is retained by the clamp 40, in addition to the configuration illustrated in FIG. 1.

Furthermore, the return pipe 30 is provided with a damping portion 31 at one end on the engine 2 side. This damping portion 31 is a bellows shape, and dampens movement of the return pipe 30, which is a clamped body. It should be noted that the damping portion may also be provided in the feed pipe 20, but in such a case, the return pipe 30 would not be provided with the damping portion. In other words, the damping portion is provided in either one of the feed pipe 20 or the return pipe 30.

In addition, the damping portion 31 is not limited to a bellows shape, and may be an inertia mass (inertia weight) or the like, wrapping the outer circumference of the return pipe 30.

Moreover, the axis of the extending direction of the feed pipe 20 at the first retained portion 21 and the axis of the extending direction of the return pipe 30 at the second retained portion 32 are in a skewed positional relationship.

Accordingly, even if movement (for example, vibration, migration, displacement, etc.) in the same vector occurs in the feed pipe 20 and the return pipe 30 temporarily, since the force vector added from the feed pipe 20 to the clamp 40 does not coincide with the force vector added from the return pipe 30 to the clamp 40, it is possible for the clamp 40 to suppress movement (for example, vibration, migration, displacement, etc.) of the feed pipe 20 and return pipe 30. Here, as the movement source of the feed pipe 20 and the return pipe 30, there are sources due to oil flowing inside each pipe, vibration received from the engine 2 and vibration received from the turbocharger 3.

Furthermore, the oil flowing inside the feed pipe 20 at the first retained portion 21 and the oil flowing inside the return pipe 30 at the second retained portion 32 are flowing in opposite directions. Herein, focusing on the flow vectors of oil flowing inside both pipes, which are in a skewed positional relationship, if an angle formed by both vectors formed when the starting points of the flow vector on the feed pipe 20 side and the flow vector on the return pipe 30 side match is defined as theta, opposite directions indicates establishing a relationship in which theta is between 90 and 180 degrees.

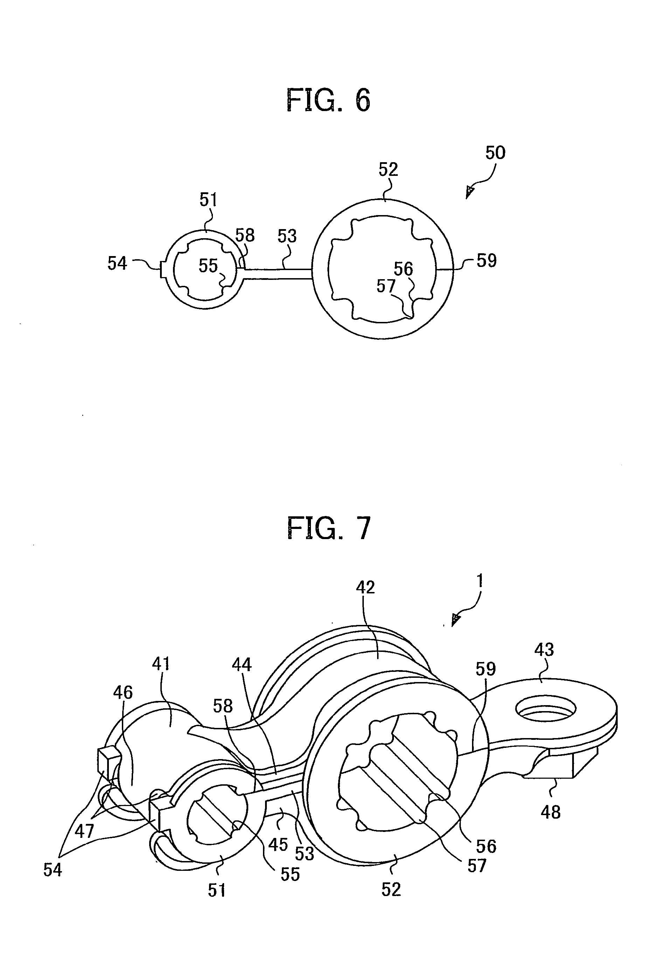

It should be noted that the rubber component 50 is provided with a first slit 58 and a second slit 59 illustrated later in FIG. 7 in order for the rubber component 50 to be inserted from an outward radial direction of the feed pipe 20 and the return pipe 30, and to be mounted to the first retained portion 21 and the second retained portion 32.

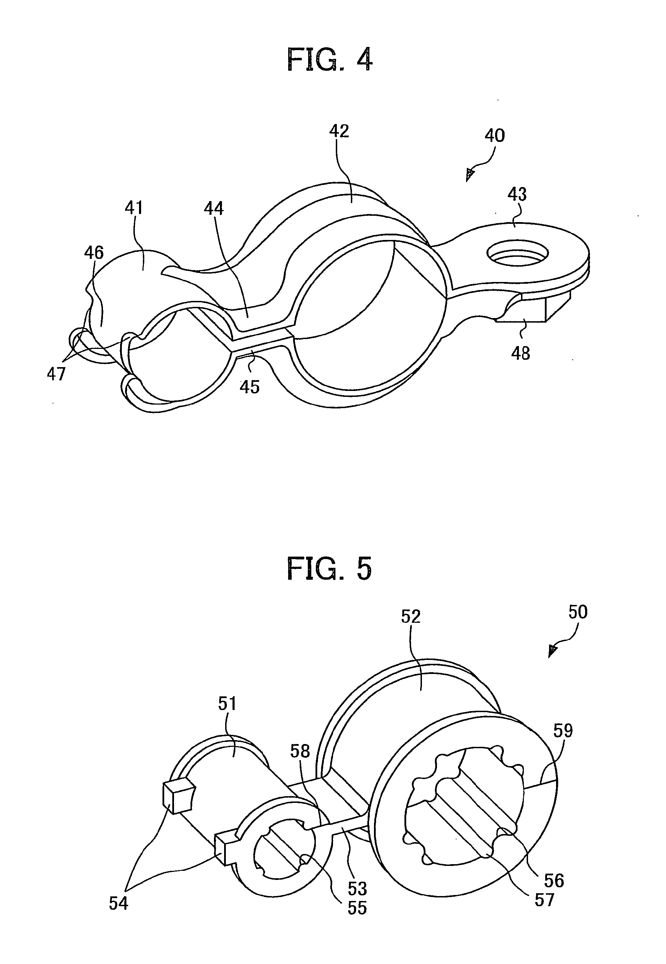

FIG. 4 is a view showing a configuration of the clamp 40 according to the present embodiment.

The clamp 40 is provided with a first retaining portion 41 that retains the feed pipe 20, a second retaining portion 42 that retains the return pipe 30, an open/close portion 43 that separates when opening the clamp and abuts when closing the clamp, a first-side joining portion 44 that exists on a first side of the two joining portions that join the first retaining portion 41 and the second retaining portion 42, a second-side joining portion 45 that exists on a second side of the two joining portions, a hinge portion 46 that deforms with opening and closing the clamp, a clamp-side positioning portion 47 provided on both outer sides of the hinge portion 46, and a nut 48 that is integrally formed on a lower side portion of the open/close portion 43. It should be noted that the clamp-side positioning portion 47 is formed in the first retaining portion 41.

The axis of the insertion direction of the feed pipe 20 of the first retaining portion 41 is formed so as to match the axis of the extending direction of the feed pipe 20 of the first retained portion 21, and the axis of the insertion direction of the return pipe 30 of the second retaining portion 42 is formed so as to match the axis of the extending direction of the return pipe 30 of the second retained portion 32; therefore, similarly to how the axis of the extending direction of the feed pipe 20 at the first retained portion 21 and the axis of the extending direction of the return pipe 30 at the second retained portion 32 are in a skewed positional relationship, the axis of the insertion direction of the feed pipe 20 of the first retaining portion 41 and the axis of the insertion direction of the return pipe 30 of the second retaining portion 42 are in a skewed positional relationship.

A configuration of the rubber component 50 according to the present embodiment is explained while referring to FIGS. 5 and 6.

FIG. 5 is a view showing a configuration of the rubber component 50 according to the present embodiment. FIG. 6 is a cross-sectional view of the rubber component 50 according to the present embodiment.

The rubber component 50 is provided with a first shock-absorbing portion 51 that is interposed between the feed pipe 20 and the first retaining portion 41, a second shock-absorbing portion 52 that is interposed between the return pipe 30 and the second retaining portion 42, a joining portion 53 that joins the first shock-absorbing portion 51 and the second shock-absorbing portion 52, a rubber-side positioning portion 54 for relatively positioning with the clamp 40 at the first shock-absorbing portion 51, a first protruding portion 55 that contacts the feed pipe 20 at the first shock-absorbing portion 51, a second protruding portion 56 that contacts with the return pipe 30 at the second shock-absorbing portion 52, a protrusion recess-groove portion 57 created as a protrusion recess-groove of the second protruding portion 56, a first slit 58 for inserting the feed pipe 20, and a second slit 59 for inserting the return pipe 30. It should be noted that four of each of the first protruding portion 55 and the second protruding portion 56 are formed. In addition, the rubber-side positioning portion 54 is formed at the first shock-absorbing portion 51.

The first protruding portion 55 and the second protruding portion 56, which respectively contact the feed pipe 20 and the return pipe 30 at each of the first shock-absorbing portion 51 and the second shock-absorbing portion 52, are formed because, in a case where the necessity arises to adjust the position of the clamp device 1 during assembly and after assembly of the clamp device 1, the contact area of the first shock-absorbing portion 51 and second shock-absorbing portion 52 with the feed pipe 20 and the return pipe 30 are reduced so that it is possible to positionally adjust the clamp device 1 in a state in which the feed pipe 20 and the return pipe 30 are supported, without repairing by step by step disassembling and assembling the clamp device 1.

In addition, in the present embodiment, although a protrusion recess-groove is not formed in the first shock-absorbing portion 51 on the feed pipe 20 side, which has a small diameter, a configuration may be further desired in which a protrusion recess-groove is formed in the first shock-absorbing portion 51 as well as the second shock-absorbing portion 52.

It should be noted that, although the first shock-absorbing portion 51 and the second shock-absorbing portion 52 are joined via the joining portion 53, it is not limited thereto, and the first shock-absorbing portion 51 and the second shock-absorbing portion 52 may be separated without providing the joining portion 53.

Moreover, the axis of the insertion direction of the feed pipe 20 of the first shock-absorbing portion 51 and the axis of the insertion direction of the return pipe 30 of the second shock-absorbing portion 52 are formed to be parallel. Herein, since the rubber component 50 has elasticity, even if both like axes are formed to be parallel, there is no impediment in assembling to both retained portions in a skewed positional relationship. In addition, it is easier to manufacture the rubber component when both like axes formed to be parallel.

The first shock-absorbing portion 51 is formed in a circular shape that surrounds the entire circumference of the feed pipe 20. In addition, the second shock-absorbing portion 52 similarly is also formed in a circular shape that surrounds the entire circumference of the return pipe 30.

The first slit 58 is formed at one location in a circumferential direction of the first shock-absorbing portion 51, and is disposed at a location that substantially coincides with the direction, in the circumferential direction, of the open/close portion 43. In addition, the second slit 59 is formed at one location in a circumferential direction of the second shock-absorbing portion 52, and is disposed at a location that substantially coincides with the direction, in the circumferential direction, of the open/close portion 43.

FIG. 7 is a view showing a state in which the clamp 40 and rubber component 50 according to the present embodiment are joined together.

According to FIG. 7, the relative positions of the clamp 40 and the rubber component 50 are determined by engaging the clamp-side positioning portion 47 and the rubber-side positioning portion 54.

It should be noted that the clamp-side positioning portion 47 is formed as a concave portion on both outer sides of the hinge portion 46, and the rubber-side positioning portion 54 is formed as a convex portion at a location corresponding to the concave portion.

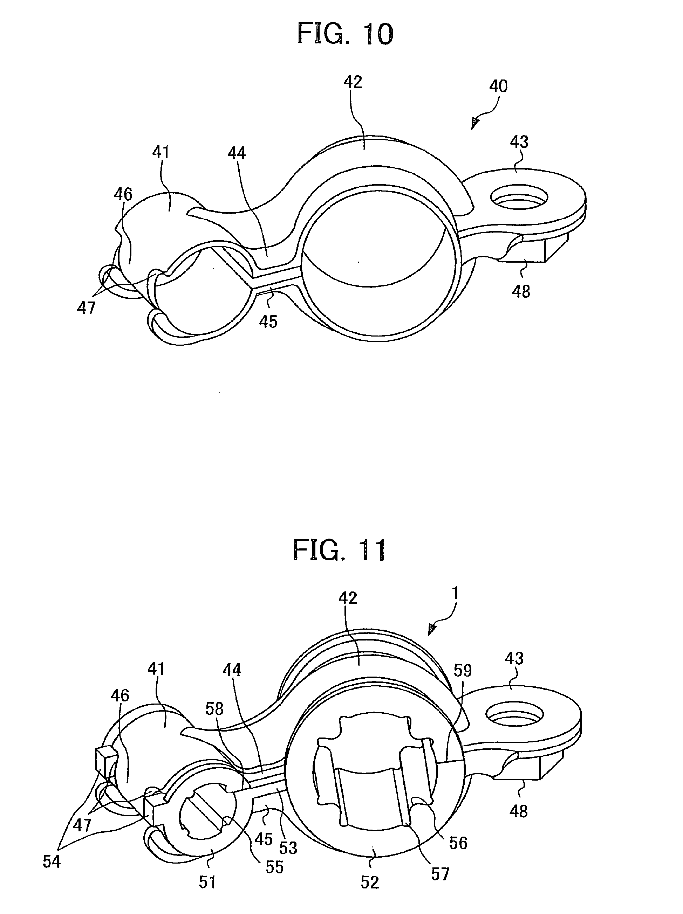

In FIGS. 4 and 7, the axis of the insertion direction of the feed pipe 20 at the first retaining portion 41 and the axis of the insertion direction of the return pipe 30 at the second retaining portion 42 are formed to be parallel; however, the present invention can be applied also to a case of being formed so that the axis of the insertion direction of the feed pipe 20 at the first retaining portion 41 and the axis of the insertion direction of the return pipe 30 at the second retaining portion 42 are in a skewed positional relationship depending on the arrangement convenience of the feed pipe 20 and the return pipe 30. This case is shown in FIGS. 10 and 11. In this case, since it is not necessary to form a parallel portion that assumes attachment of the clamp 40 to both the feed pipe 40 and the return pipe 30, the degree of freedom in design and degree of freedom in layout of other materials are increased.

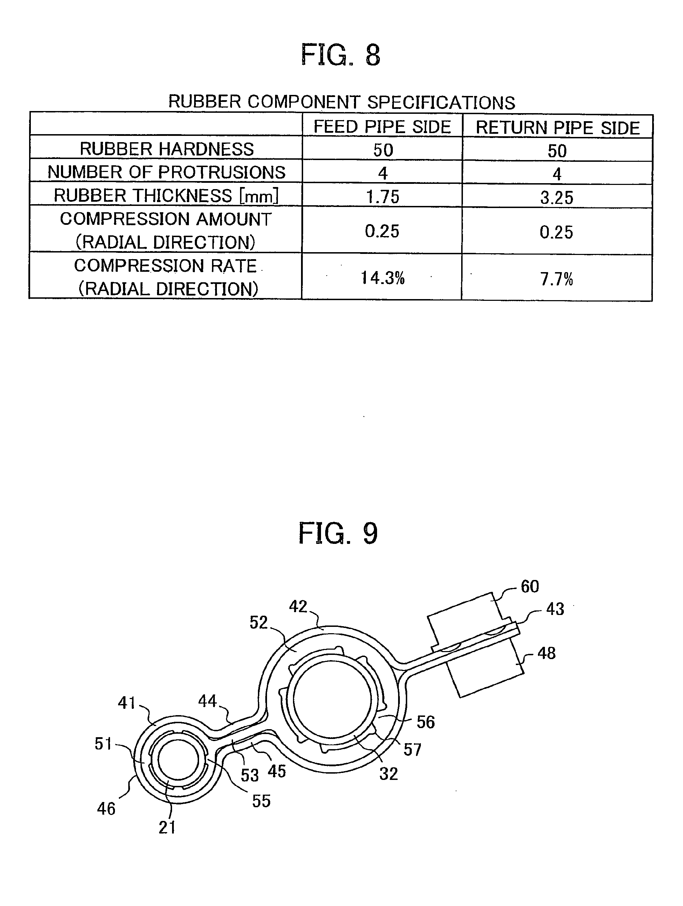

FIG. 8 is a table showing specifications of the rubber component 50 according to the present embodiment.

According to FIG. 8, the rubber hardness, number of protrusions, and compression amount when tightening the clamp are common between the feed pipe 20 and the return pipe 30; however, for the rubber thickness, the feed pipe 20 is thinner than the return pipe 30, and for the compression rate when tightening the clamp, the feed pipe 20 is higher than the return pipe 30. It should be noted that the compression rate when tightening the clamp is the rate of change from the natural thickness to the thickness after compression.

In the present embodiment, the rubber thickness of the first shock-absorbing portion 51 on the feed pipe 20 side of small diameter is made to be thinner than the rubber thickness of the second shock-absorbing portion 52. This is because the diameter of the return path side is made large so that fluid such as oil sent to an auxiliary component such as a turbocharger is promptly emitted due to gravity to the internal combustion engine when the internal combustion engine is stopped.

However, the present invention does not exclude the feed pipe 20 and the return pipe 30 being made the same diameter, and the rubber thickness and compression rate for each of the first shock-absorbing portion 51 and the second shock-absorbing portion 52 being the same. In addition, the present invention does not exclude the return pipe 30 being made a smaller diameter than the feed pipe 20, the rubber thickness of the second shock-absorbing portion 52 being made thinner than that of the first shock-absorbing portion 51, and increasing the compression rate thereof.

FIG. 9 is a cross-sectional view through the first retained portion 21 and the second retained portion 32 in the clamp device 1 according to the present embodiment when the clamp is tightened.

According to FIG. 9, when the clamp is tightened, it shows that the first side joining portion 44 and the second side joining portion 45 provided in the clamp 40 are separated, and the separation distance is formed so as to be at least the thickness of the joining portion 53 provided by the rubber 50.

According to this configuration, particularly in a case of screwing in a skewed direction of the feed pipe 20 in the joining portion 53 of the rubber component 50 occurs when tightening the clamp, and the feed pipe 20 and the like are fixed by tightening the clamp 40 to maintain a skewed state occurring in the joining portion 53, it is possible to prevent the occurrence of displacement towards a shock-absorbing portion from the first shock-absorbing portion 51 and the second shock-absorbing portion 52 stretching, due to twisting and winding occurring at the skewed portion by the skewed portion in the joining portion 53 being sandwiched by the first-side joining portion 44 and the second-side joining portion 45 on the clamp 40 side.

In addition, this separation distance is preferably a distance to an extent that maintains the joining portion 53 of the rubber component 50 so as not to be compressed, and is preferably set so as to be equal to the thickness of the joining portion 53 when naturally standing independently before being mounted in the clamp 40.

In addition, the hinge portion 46 provided in the clamp 40 is disposed at an end side in an aligned direction of the feed pipe 20 at the first retained portion 21 and the return pipe 30 at the second retained portion 32. Furthermore, the open/close portion 43 provided in the clamp 40 is disposed at another end side in the aligned direction.

According to the present embodiment, there are the following effects.
(1) Since a state in which the feed pipe 20 and the return pipe 30 are inserted can be maintained by the elastic force of the first shock-absorbing portion 51 and the second shock-absorbing portion 52 themselves, it becomes possible to perform a fixing operation of the clamp 40 with extraordinary ease and stability.
(2) It becomes unnecessary to provide a parallel portion, which is a portion at which the feed pipe 20 and return pipe 30 are made parallel, and thus the degree of freedom in design is increased.
   Furthermore, since the axis of the insertion direction of the feed pipe 20 and the axis of the insertion direction of the return pipe 30 are in a skewed positional relationship, even if vector movement (for example, vibration, migration, displacement, etc.) that is the same in the feed pipe 20 and the return pipe 30 temporarily occurs, the force vector added from the return pipe 30 to the clamp 40 does not coincide with the force vector added from the feed pipe 20 to the clamp 40, and thus it becomes possible for the clamp 40 to suppress the movement (for example, vibration, migration, displacement, etc.) of the feed pipe 20 and the return pipe 30.
(3) The first shock-absorbing portion 51 and the second shock-absorbing portion 52 are made to have different compression rates in a state in which the clamp is tightened; therefore, it becomes possible to appropriately select an elastic member as the first shock-absorbing portion 51 and the second shock-absorbing portion 52 with the most suitable compression rate to complement the material properties of the feed pipe 20 and the return pipe 30.
   Furthermore, by making the compression rates of both elastic members (the first shock-absorbing portion 51 and the second shock-absorbing portion 52) different, the extents to which the feed pipe 20 and the return pipe 30 are restricted by the clamp 40 become different. Accordingly, since a condition is made in which the movements of the feed pipe 20 and return pipe 30 differ more greatly, it becomes possible to further suppress the movements of the feed pipe 20 and the return pipe 30.
(4) Since the first shock-absorbing portion 51 and the second shock-absorbing portion 52 are joined in one body by the joining portion 53, the number of components can be reduced, and thus assembly workability can also be improved. In addition, since the first shock-absorbing portion 51 and the second shock-absorbing portion 52 are joined, the relative positioning of both when assembling is fixed automatically.
(5) The separation distance between the first-side joining portion 44 and the second-side joining portion 45 was formed so as to be at least the thickness of the joining portion 53 on the shock-absorbing portion side when the clamp 40 is tightened.
   Accordingly, since the distance can be made to an extent that maintains the joining portion 53 on the shock-absorbing portion side so as not to be compressed, it is possible to prevent vibration and noise of the joining portion 53 on the shock-absorbing portion side, as well as prevent the joining portion 53 on the shock-absorbing side deteriorating by coming together with foreign substances and the like in the gap between the joining portion on the clamp side (first-side joining portion 44 and second-side joining portion 45) and the joining portion 53 on the shock-absorbing side.
(6) By disposing the first slit 58 and the second slit 59 at positions substantially coinciding with a direction of the open/close portion 43 on each of the first shock-absorbing portion 51 and the second shock-absorbing portion 52, it becomes possible to suppress partial biasing or tucking of the first shock-absorbing portion 51 or the second shock-absorbing portion 52 during an operation to tighten the clamp 40.
   In addition, since the first slit 58 and the second slit 59 are respectively formed in the first shock-absorbing portion 51 and the second shock-absorbing portion 52, and are configured so that these slits open and allow the feed pipe 20 and the return pipe 30 to be inserted thereinto, and since an operation to fit a pipe into the other of the shock-absorbing portions after a pipe has been fit into one of the shock-absorbing portions is possible due to the elastic force possessed by the shock-absorbing portions themselves, the work efficiency is remarkably improved.
   Furthermore, since assembly work of the clamp 40 can be performed without retaining tightly so that both shock-absorbing members do not fall from the pipes when holding between and fixing the clamp 40 due to the elastic force possessed by the shock-absorbing portions themselves, work efficiency is remarkably improved.
(7) Since the first shock-absorbing portion 51 and the first retaining portion 41 have positioning portions (rubber-side positioning portion 54 and clamp-side positioning portion 47), it becomes possible to make the positions of the first slit 58 and the second slit 59 more surely coincide with the direction of the open/close portion 43.
(8) Since concave portions for positioning are formed at the hinge portion 46, the rigidity of the hinge portion 46 decreases, and thus it is possible to more easily open and close the clamp 40.

(1') Since the axis of the extending direction of the feed pipe 20 at the first retained portion 21 and the axis of the extending direction of the return pipe 30 at the second retained portion 32 are in a skewed positional relationship, even if movement (for example, vibration, migration, displacement, etc.) in the same vector occurs in the feed pipe 20 and the return pipe 30 temporarily, since the force vector added from the return pipe 30 to the clamp 40 does not coincide with the force vector added from the feed pipe 20 to the clamp 40, it is possible for the clamp to suppress movement (for example, vibration, migration, displacement, etc.) of the feed pipe 20 and the return pipe 30.
(2') Since the pipe diameter of the first retained portion 21 and the pipe diameter of the second retained portion 32 are different, the sizes of the first retaining portion 41 and the second retaining portion 42 are naturally made to be different. Accordingly, the force vector added from the feed pipe 20 to the clamp 40 and the force vector added from the return pipe 30 to the clamp 40 become more different, and thus it is possible for movement of the feed pipe 20 and the return pipe 30 to be further suppressed.
(3') Since the movement (for example, vibration, migration, displacement, etc.) of one clamped body (return pipe 30) provided with the damping portion 31 and the movement of another clamped body (feed pipe 20) without a damping portion are made in a further differentiated state, it is possible for the movement of the feed pipe 20 and the return pipe 30 to be further suppressed.
(4') Since the clamped bodies (feed pipe 20 and return pipe 30) are made to be a two-point support structure, it is possible to increase the degrees of freedom in running the pipes.
   Furthermore, if the pipe length of the feed pipe 20 and the pipe length of the return pipe 30 are different, since the wavelength of string vibrations occurring in the feed pipe 20 and the return pipe 30 will be different, it is possible to make the movements of the feed pipe 20 and the return pipe 30 be in a further differentiated state.
(5') Since the movements (migration, vibration) of the feed pipe 20 and the return pipe 30 are made to be a further differentiated state by making the flow rates of fluids flowing inside the feed pipe 20 and the return pipe 30 different, it is possible to further suppress movement of the feed pipe 20 and the return pipe 30.
(6') Since the movement (migration, vibration) of both pipes is made to be in a further differentiated state by way of the fluids flowing in opposite directions in the feed pipe 20 and the return pipe 30, it is possible to further suppress movement of the feed pipe 20 and the return pipe 30.
(7') Since the clamp 40 does not receive external forces (vibration, etc.) except from the clamped bodies (feed pipe 20 and return pipe 30), it is possible to further suppress movement of the feed pipe 20 and the return pipe 30.
(8') Since the thickness of both elastic members (thicknesses of the first shock-absorbing portion 51 and the second shock-absorbing portion 52) are different, in a case where the compression amounts on both elastic members of the clamp 40 are the same, the extents to which the feed pipe 20 and the return pipe 30 are restricted by the clamp 40 will be different. Accordingly, since the movements of the feed pipe 20 and the return pipe 30 are made to be in a further differentiated state, it is possible to further suppress movement of the feed pipe 20 and the return pipe 30.
(9') The extents to which the feed pipe 20 and the return pipe 30 are restricted by the clamp 40 become different because the compression rates of both elastic members (first shock-absorbing portion 51 and second shock-absorbing portion 52) are different. Accordingly, since the movements of the feed pipe 20 and the return pipe 30 are made to be in a further differentiated state, it is possible to further suppress movement of the feed pipe 20 and the return pipe 30.
(10') By making the clamp 40 and the rubber component 50 to be separate bodies, the structure of each is simplified, and production thereof can also be carried out easily.
   Furthermore, since the first shock-absorbing portion 51 and the second shock-absorbing portion 52 are joined by the joining portion 53, the number of components can be reduced, and thus assembly workability can also be improved. In addition, since the first shock-absorbing portion 51 and the second shock-absorbing portion 52 are joined by the joining portion 53, the relative positioning of both when assembling is fixed automatically.
   Furthermore, since a portion of the clamp 40 corresponding to the joining portion 53 (first-side joining portion 44 and second-side joining portion 45) is made a configuration in which the joining portion 53 is not sandwiched even when tightening the clamp, it is possible to prevent displacement of the first shock-absorbing portion 51 and the second shock-absorbing portion 52 from occurring during tightening (when tightening the rubber component 50 with the clamp 40).
(11') By disposing the first slit 58 at a position substantially coinciding with the direction of the open/close portion 43 in the circumferential direction of the first shock-absorbing portion 51, it becomes possible to suppress partial biasing or tucking of the first shock-absorbing portion 51 during a tightening operation of the clamp 40.
(12') By disposing the second slit 59 at a position substantially coinciding with the direction of open/close portion 43 in the circumferential direction of the second shock-absorbing portion 52, it becomes possible to suppress partial biasing or tucking of the second shock-absorbing portion 52 during a tightening operation of the clamp 40.
(13') Since the first shock-absorbing portion 51 and the first retaining portion 41 have positioning portions (rubber-side positioning portion 54 and clamp-side positioning portion 47), it becomes possible to make the positions of the first slit 58 and the second slit 59 more surely coincide with the direction of the open/close portion 43.
(14') Since the concave portions for positioning are formed in the hinge portion 46, the rigidity of the hinge portion 46 decreases, and thus it is possible to more easily open and close the clamp 40.
(15') By the feed pipe 20 and the return pipe 30 being made a two-point support structure, it is possible to increase the degrees of freedom in running both pipes.
   Furthermore, since both pipes are vibration insulated by connecting to the other pipe adjacent thereto without vibration insulating by connecting to the engine 2 or the like, it is possible to make a vibration insulating structure be of small size and lightweight.
(16') By forming at least one of the like ends of the feed pipe 20 and the return pipe 30 to be integrally connected, it is possible to preliminarily assemble (sub-assembly) the clamped body 6 and the clamp device 1 with the first coupling portion 70 thereof and the clamp 40. Accordingly, it is possible to simplify assembly of the clamped body 6 to the engine 2 and the turbocharger 3, and shorten the assembly time.

Furthermore, by forming one end side of the feed pipe 20 and the return pipe 30 in an integrated flange, in addition to being able to make it an assembly, it is possible to suppress vibration without fixing the clamp 40 to another component by fastening another end side together in the clamp 40.

It should be noted that the present invention is not limited to the embodiment described above, and modifications, improvements and the like within the scope that allows the object of the present invention to be achieved are included in the present invention.

A clamp device is provided that can suppress movement (for example, vibration, migration, displacement, etc.) of two pipes with the clamp. Provided are a first clamped body (feed pipe 20) and a second clamped body (return pipe 30) disposed to be adjacent, and a clamp 40 that includes a first retaining portion 41 that retains the first clamped body and a second retaining portion 42 that retains the second clamped body, and mutually restricts the first clamped body and the second clamped body, in which the axis of an extending direction of the first clamped body at a first retained portion 21, which is a clamp retained portion of the first clamped body, and the axis of an extending direction of the second clamped body at a second retained portion 32, which is a clamp retained portion of the second clamped body, are in a skewed positional relationship.

## Claims

1. A clamp device (1) comprising:
a first clamped body (20) and a second clamped body (30) disposed to be adjacent;
a clamp (40) that includes a first retaining portion (41) that retains the first clamped body (20) and a second retaining portion (42) that retains the second clamped body (30), and that mutually restricts the first clamped body (20) and the second clamped body (30); and
a first shock-absorbing portion (51) containing an elastic member that is interposed between the first clamped body (20) and the first retaining portion (41), and a second shock-absorbing portion (52) containing an elastic member that is interposed between the second clamped body (30) and the second retaining portion (42),
wherein the clamp (40), and the first shock-absorbing portion (51) and the second shock-absorbing portion (52) are formed to be separate bodies, and
wherein the first shock-absorbing portion (51) and second shock-absorbing portion (52) are circular, are joined in one body by a joining portion (53), and have an incised portion (58, 59) for inserting the first clamped body (20) and the second clamped body (30) formed in each of the first shock-absorbing portion (51) and the second shock-absorbing portion (52),
**characterized in that** the first shock-absorbing portion (51) and the second shock-absorbing portion (52), which contain an elastic member, have compression rates that are respectively different in a tightened state of the clamp (40).

2. The clamp device according to claim 1, **characterized**
**in that** a first-side joining portion (44) that is positioned at one side of the joining portion (53) and joins the first retaining portion (41) with the second retaining portion (42), and a second-side joining portion (45) that is positioned at another side of the joining portion (53) and joins the first retaining portion (41) with the second retaining portion (42) are formed so as to be separated a predetermined distance, in a tightened state of the clamp (40), and
**in that** the predetermined distance is formed so as to be at least a thickness of the joining portion (53).

3. The clamp device according to claim 2, **characterized**
**in that** the clamp (40) includes a hinge portion (46) that is disposed at an end side in an aligned direction of the first clamped body (20) and the second clamped body (30) and deforms with opening and closing of the clamp (40), and an open/close portion (43) that is disposed at another end side in the aligned direction and separates when the clamp (40) is opened and abuts when closed, and
**in that** the incised portion (58, 59) is disposed at a position that substantially coincides with an open/close portion direction in each of the first shock-absorbing portion (51) and the second shock-absorbing portion (52) when the clamp (40) is closed.

4. The clamp device according to claim 3, **characterized**
**in that** a positioning portion (47, 54) is formed in the first shock-absorbing portion (51) and the first retaining portion (41), respectively, and
**in that** relative positioning of the first shock-absorbing portion (51) and the first retaining portion (41) is set by engaging both of the positioning portions (47, 54).

5. The clamp device according to claim 4, **characterized**
**in that** the positioning portion (47) of the first retaining portion (41) is formed in the hinge portion (46) of the clamp (40) as a concave portion, and
**in that** the positioning portion (54) of the first shock-absorbing portion (51) is formed as a convex portion that corresponds to the concave portion.

## Patentansprüche

1. Klemmvorrichtung (1), umfassend:
einen ersten geklemmten Körper (20) und einen zweiten geklemmten Körper (30), die so angeordnet sind; dass sie benachbart sind,
eine Klemme (40), welche einen ersten Halteabschnitt (41) umfasst, der den ersten geklemmten Körper (20) hält, und einen zweiten Halteabschnitt (42) umfasst, der den zweiten geklemmten Körper (30) hält, und die den ersten geklemmten Körper (20) und den zweiten geklemmten Körper (30) gegenseitig einschränkt, und
einen ersten stoßdämpfenden Abschnitt (51), der ein elastisches Element enthält, welches zwischen dem ersten geklemmten Körper (20) und dem ersten Halteabschnitt (41) angeordnet ist, und
einen zweiten stoßdämpfenden Abschnitt (52), der ein elastisches Element enthält, welches zwischen dem zweiten geklemmten Körper (30) und dem zweiten Halteabschnitt (42) angeordnet ist,
wobei die Klemme (40) und der erste stoßdämpfende Abschnitt (51) und der zweite stoßdämpfende Abschnitt (52) als getrennte Körper ausgebildet sind, und
wobei der erste stoßdämpfende Abschnitt (51) und der zweite stoßdämpfende Abschnitt (52) kreisförmig sind, in einem Körper durch einen Verbindungsabschnitt (53) verbunden sind, und einen eingeschnittenen Abschnitt (58, 59) aufweisen, der jeweils in dem ersten stoßdämpfenden Abschnitt (51) und dem zweiten stoßdämpfenden Abschnitt (52) ausgebildet ist, um den ersten geklemmten Körper (20) und den zweiten geklemmten Körper (30) einzuführen,
**dadurch gekennzeichnet, dass** der erste stoßdämpfende Abschnitt (51) und der zweite stoßdämpfende Abschnitt (52), die ein elastisches Element enthalten, Kompressionsraten aufweisen, die jeweils in einem festgemachten Zustand der Klemme (40) unterschiedlich sind.

2. Klemmvorrichtung nach Anspruch 1,
**dadurch gekennzeichnet, dass** ein erste-Seite-Verbindungsabschnitt (44), der an einer Seite von dem Verbindungsabschnitt (53) positioniert ist und den ersten Halteabschnitt (41) mit dem zweiten Halteabschnitt (42) verbindet, und ein zweite-Seite-Verbindungsabschnitt (45), der an einer anderen Seite von dem Verbindungsabschnitt (53) angeordnet ist und den ersten Halteabschnitt (41) mit dem zweiten Halteabschnitt (42) verbindet, so ausgebildet sind, dass sie in einem festgemachten Zustand der Klemme (40) um einen vorbestimmten Abstand voneinander getrennt sind, und
dass der vorbestimmte Abstand so ausgebildet ist, dass er wenigstens eine Dicke von dem Verbindungsabschnitt (53) beträgt.

3. Klemmvorrichtung nach Anspruch 2,
**dadurch gekennzeichnet, dass** die Klemme (40) einen Gelenk-Abschnitt (46) umfasst, welcher an einer Endseite in einer Ausrichtungs-Richtung von dem ersten geklemmten Körper (20) und dem zweiten geklemmten Körper (30) angeordnet ist, und sich beim Öffnen und Schließen der Klemme (40) verformt, und einen Öffnungs-/Schließabschnitt (43) umfasst, welcher an einer anderen Endseite in der Ausrichtungs-Richtung angeordnet ist, und sich trennt, wenn die Klemme (40) geöffnet ist und anstößt, wenn die Klemme geschlossen ist, und
dass der eingeschnittene Abschnitt (58, 59) an einer Position angeordnet ist, die im Wesentlichen mit einer Richtung des Öffnüngs-/Schließabschnitts in jedem von dem ersten stoßdämpfenden Abschnitt (51) und dem zweiten stoßdämpfenden Abschnitt (52) zusammenfällt, wenn die Klemme (40) geschlossen ist.

4. Klemmvorrichtung nach Anspruch 3,
**dadurch gekennzeichnet, dass** ein Positionierungsabschnitt (47, 54) jeweils in dem ersten stoßdämpfenden Abschnitt (51) und dem ersten Halteabschnitt (41) ausgebildet ist, und dass eine relative Positionierung von dem ersten stoßdämpfenden Abschnitt (51) und dem ersten Halteabschnitt (41) eingestellt wird, indem die beiden Positionierungsabschnitte (47, 54) in Eingriff gebracht werden.

5. Klemmvorrichtung nach Anspruch 4,
**dadurch gekennzeichnet, dass** der Positionierungsabschnitt (47) von dem ersten Halteabschnitt (41) in dem Gelenk-Abschnitt (46) von der Klemme (40) als ein konkaver Abschnitt ausgebildet ist, und
dass der Positionierungsabschnitt (54) von dem ersten stoßdämpfenden Abschnitt (51) als ein konvexer Abschnitt ausgebildet ist, welcher dem konkaven Abschnitt entspricht.

## Revendications

1. Dispositif de serrage (1) comprenant :
un premier corps serré (20) et un deuxième corps serré (30) disposés de manière à être adjacents ;
une pince (40) qui comprend une première partie de retenue (41) qui retient le premier corps serré (20) et une deuxième partie de retenue (42) qui retient le deuxième corps serré (30) et qui limite mutuellement le premier corps serré (20) et le deuxième corps serré (30) ; et
une première partie amortissante (51) contenant un élément élastique qui est intercalé entre le premier corps serré (20) et la première partie de retenue (41) et une deuxième partie amortissante (52) contenant un élément élastique qui est intercalé entre le deuxième corps serré (30) et la deuxième partie de retenue (42),
dans lequel la pince (40) et la première partie amortissante (51) et la deuxième partie amortissante (52) sont formées afin d'être des corps séparés, et
dans lequel la première partie amortissante (51) et la deuxième partie amortissante (52) sont circulaires, sont assemblées en un corps par une partie d'assemblage (53), et ont une partie incisée (58, 59) pour insérer le premier corps serré (20) et le deuxième corps serré (30) formées dans chacune parmi la première partie amortissante (51) et la deuxième partie amortissante (52),
**caractérisé en ce que** la première partie amortissante (51) et la deuxième partie amortissante (52), qui contiennent un élément élastique, ont des taux de compression qui sont respectivement différents dans un état serré de la pince (40).

2. Dispositif de serrage selon la revendication 1, **caractérisé :**
**en ce qu'**une partie d'assemblage d'un premier côté (44) qui est positionnée au niveau d'un côté de la partie d'assemblage (53) et relie la première partie de retenue (41) avec la deuxième partie de retenue (42) et une partie d'assemblage d'un deuxième côté (45) qui est positionnée de l'autre côté de la partie d'assemblage (53) et relie la première partie de retenue (41) avec la deuxième partie de retenue (42), sont formées afin d'être séparées d'une distance prédéterminée, dans un état serré de la pince (40), et
**en ce que** la distance prédéterminée est formée afin d'être d'au moins une épaisseur de la partie d'assemblage (53).

3. Dispositif de serrage selon la revendication 2, **caractérisé :**
**en ce que** la pince (40) comprend une partie de charnière (46) qui est disposée au niveau d'un côté d'extrémité dans une direction alignée avec le premier corps serré (20) et le deuxième corps serré (30) et se déforme avec l'ouverture et la fermeture de la pince (40), et une partie d'ouverture/de fermeture (43) qui est disposée d'un autre côté d'extrémité dans la direction alignée et se sépare lorsque la pince (40) est ouverte et vient en butée lorsqu'elle est fermée, et
**en ce que** la partie incisée (58, 59) est disposée dans une position qui coïncide sensiblement avec une direction de partie d'ouverture/fermeture dans chacune parmi la première partie amortissante (51) et la deuxième partie amortissante (52) lorsque la pince (40) est fermée.

4. Dispositif de serrage selon la revendication 3, **caractérisé :**
**en ce qu'**une partie de positionnement (47, 54) est formée dans la première partie amortissante (51) et la première partie de retenue (41), respectivement, et
**en ce que** le positionnement relatif de la première partie amortissante (51) et de la première partie de retenue (41) est déterminé en mettant en prise les deux parties de positionnement (47, 54).

5. Dispositif de serrage selon la revendication 4, **caractérisé :**
**en ce que** la partie de positionnement (47) de la première partie de retenue (41) est formée dans la partie de charnière (46) de la pince (40) comme une partie concave, et
**en ce que** la partie de positionnement (54) de la première partie amortissante (51) est formée comme une partie convexe qui correspond à la partie concave.
